# EUROPEAN PATENT APPLICATION

(11) **EP 1 112 965 A2**
(43) Date of publication of application: **04.07.2001**
(21) Application number: 00500268.8
(22) Date of filing: 22.12.2000
(51) Int. Cl.: C02F 1/30, C02F 1/78

(54) **Process for the degradation of organic compounds in aqueous solution by means of ozonisation and sunlight irradiation**

(30) Priority: 28.12.1999 ES 9902857
(71) Applicant: SOCIEDAD ESPANOLA DE CARBUROS METALICOS S.A., 08038 Barcelona (ES)
(72) Inventor: Peral Perez, Josep, 08193 Bellaterra (ES); Casade Jimenez, Jose, 08014 Barcelona (ES); Llibre Urpi, Juan, 08210 Barbera Del Valles (ES)
(74) Representative: Ponti Sales, Adelaida

(57) **Abstract**

Irradiation can be carried out with direct or indirect sunlight. Ozonisation and irradiation can be carried out simultaneously or the irradiation can be carried out after ozonisation. The ozonisation can be carried out in the presence of a catalyst in homogeneous phase.

The process is used by purification of pollutant waters.

## Description

### TECHNICAL FIELD OF THE INVENTION

The present invention refers to a new process for the degradation and/or decomposition of organic compounds in aqueous solution by means of ozonisation and sunlight irradiation of said solution.

### BACKGROUND OF THE INVENTION

Oxidation of organic matter in aqueous solution by using ozone is a very well known method in the prior art for the treatment of waters. Unfortunately, the applications of ozone in this field are severely limited because of the high energetic and economical requirements. Due to the high chemical instability of ozone, only a small fraction of the ozone molecules dissolved in water possibly react with the contaminants, most of the ozone molecules being auto-degraded. In this sense, any technological modification that would lead to a more advantageous use of the large quantities of wasted ozone would increase the efficiency of the oxidation process of contaminants, making its application more attractive from an economical point of view.

Thanks to the works of Hoigné et al. (Staehelin, J.; Hoigné, J.; *Environ. Sci. Technol.,* **1985**, 19, 1206), it has been able to establish different ways to improve ozonisation. Hoigné has described a closed mechanism of ozonisation by radicals, in which different ways of increasing the utilization of ozone may be anticipated. One of these strategies, and far the most in use, is the ozonisation and simultaneous irradiation with ultraviolet lamps of the contaminated solutions. To carry out said irradiation, short wavelengths (220-300 nm) are used that favour the breakdown of the ozone molecule. By means of said technique, notably improved yields are obtained. However, the use of highly energetic photons increases the energetic and economic costs of the process.

It is an object of the present invention to provide a degradation process of organic matter by ozonisation, alternative to the existent ones in the prior art, which would result in lower energetic and economic costs. This way, the present invention refers to a degradation and/or decomposition process of organic matter in aqueous solution by means of ozonisation and sunlight irradiation. Until the moment, the existent techniques are limited to irradiation with wavelengths < 300 nm (T.Krutzler, R. Bauer. *Chemosphere,* **1999**, 38:11, pp. 2517-2532), since ozone does not absorb a significant quantity of light above this threshold and, therefore, an improvement of the degradation process of organic matter is not expected by ozonisation by means of simultaneous sunlight irradiation. Indeed, according to the authorized opinion of Bauer, an acknowledged expert in the art, the application of sunlight radiation to photochemical processes for decontamination of waters is only possible for the photo-Fenton reaction and for the TiO₂ photocatalysis (T.Krutzler, R. Bauer. *Chemosphere,* **1999**, 38:11, p. 2518). Surprisingly, according to the process of the present invention, a remarkable yield increase of the degradation processes of organic matter is achieved by ozonisation when irradiating with sunlight.

### DESCRIPTION OF THE INVENTION

The present invention refers to a new process for the degradation and/or decomposition of organic compounds in aqueous solution, which comprises ozonisation and irradiation of said solution with direct or indirect sunlight.

The term "direct sunlight" refers to the solar light that arrives to the Earth in a sunny day; the term "indirect sunlight" refers to the solar light that arrives to the Earth in a cloudy day.

In a preferred embodiment of the invention, said ozonisation and said irradiation are carried out simultaneously.

In another preferred embodiment of the present invention, said irradiation is carried out after said ozonisation.

Surprisingly, by means an ozonisation and sunlight irradiation process according to the present invention it is possible to carry out an efficient degradation of organic matter, whereby much higher yields are obtained than those of a similar process but performed in the darkness. Said improvement is due to the increase of the generation rate of highly oxidative radicals (such as OH·), able to degrade a wide variety of organic compounds and mixtures thereof.

Advantageously, the process of the present invention allows carrying out the degradation of organic matter in solution by using a source of natural and cost-free energy such as sunlight. Hence, the process of the present invention is for the moment an alternative solution to the current methods, which prevails over them as for simplicity, energy saving and cost reduction of the process, which is, therefore, very susceptible of industrial application.

A further advantage of the degradation and/or decomposition process of organic matter, according to the invention, is that it allows simply working with Pyrex glass reactors, the use of very brittle, and highly expensive quartz reactors being, therefore, avoided. The use of said quartz reactors is, for example, indispensable in the prior art processes for the degradation of organic matter involving irradiation with an ultraviolet lamp.

It has been described the use of Fe salts as catalysts for processes of ozonisation and irradiation with an UV lamp (German Patent 94-4414405).

In an improved degradation and/or decomposition process for organic compounds in aqueous solution according to the present invention, a catalyst is added in homogeneous phase to said solution of organic compounds. The addition of said catalyst induces an increase in the effectiveness of the organic compound removal.

Said catalyst is a compound or a mixture of compounds that contains one or several transition metals. Said transition metals are selected from the group of transition metals having valences 2 and 3 or 1 and 2, being preferably Fe, Cu, Ni, Mn or Co ions.

The improvement that produces the addition of a catalyst in homogeneous phase according to a process of the invention may be a consequence either of the photochemistry of the catalyst and of the organic matter, or of a catalytic effect of said catalyst on the ozone decomposition. Referring to this last case it has been described that ozone is able to oxidize ferrous ions (Loegager, T.; Holcman, J.; Sehested, K.; Pedersen, T. *Inorg. Chem.,* **1992**, 31 (17), 3523-9). Thus, the Fe²⁺ can react with ozone, whereupon an ozonide radical anion (O₃⁻) and Fe³⁺ are generated. The ozonide radical anion initiates a chain reaction in which hydroxyl radicals are produced.

In a preferred embodiment of the invention, the concentration of said catalyst in the aqueous solution ranges from 0.01 mM to 50 mM, preferably from 0.1 mM to 5 mM.

Advantageously, the combination of chemical oxidation by ozonisation and of photolysis of some species, according to the process of the present invention, yields a complete mineralisation of many organic contaminants.

For a given amount of wastewater to be treated, a shorter reaction time is needed to get the expected decontamination level, as compared to similar organic matter degradation processes involving ozonisation and simultaneous irradiation with an ultraviolet lamp. Consequently, according to the process of the present invention, higher contaminated-water flows may be treated or smaller reactors may be used. In this last case, the equipment costs are lower than those of the current techniques are.

On the other hand, the use of sunlight together with catalysts advantageously increases the concentration range of organic compounds that can be decomposed by means of the process of the present invention. In this manner, according to the process of the present invention, organic compounds present in aqueous solution at concentrations even as high as 100,000 ppm may be removed. In a preferred embodiment of the present invention, the concentration of the organic compounds to be degraded is lower than, or equal to, 20,000 ppm.

The process of the invention can be applied advantageously for the purification of contaminated waters.

Those skilled in the art will know that ozone does not absorb a significant amount of light above 300 nm. As illustrative of the previous statement, it is known that the stratospheric layer of ozone takes charge of filtering all the UV radiations to which it is sensitive. Therefore, it is surprising that a degradation process of organic matter according to the present invention, wherein ozonisation and sunlight irradiation are carried out, provides high yields comparable to those of the prior art's ozonisation and UV-lamp irradiation processes. This fact is indicative either that ozone does not absorb a significant quantity of light above said threshold or that exist other mechanisms that make that sunlight have in fact an important effect on ozonisation. Both phenomena are compatible.

### DESCRIPTION OF THE FIGURES

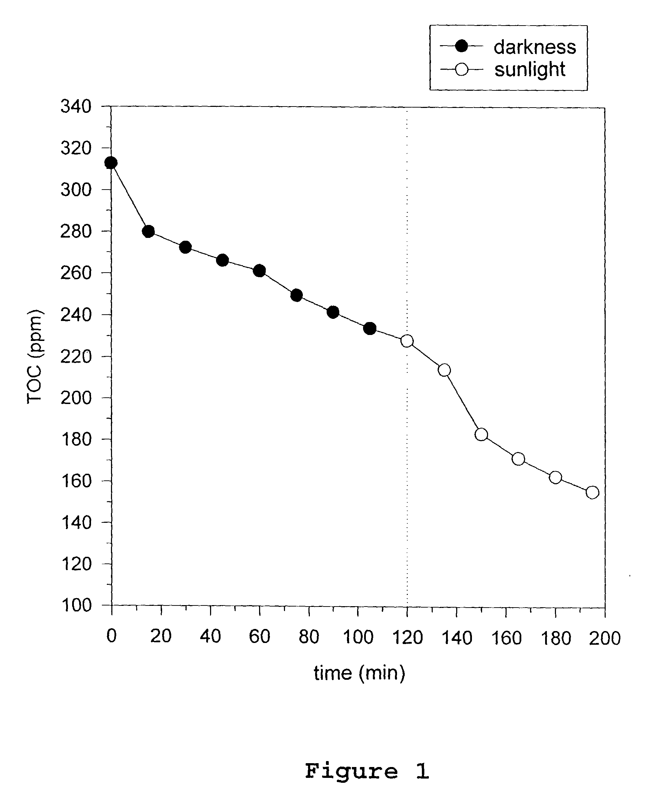

Figure 1 represents the concentration change of total organic carbon (TOC) in the solution of Example 1 as a function of the reaction time, where initially said solution is kept in the dark and later irradiated with sunlight. Said figure shows the TOC degradation rate increase when the solution is irradiated with sunlight as compared with darkness.

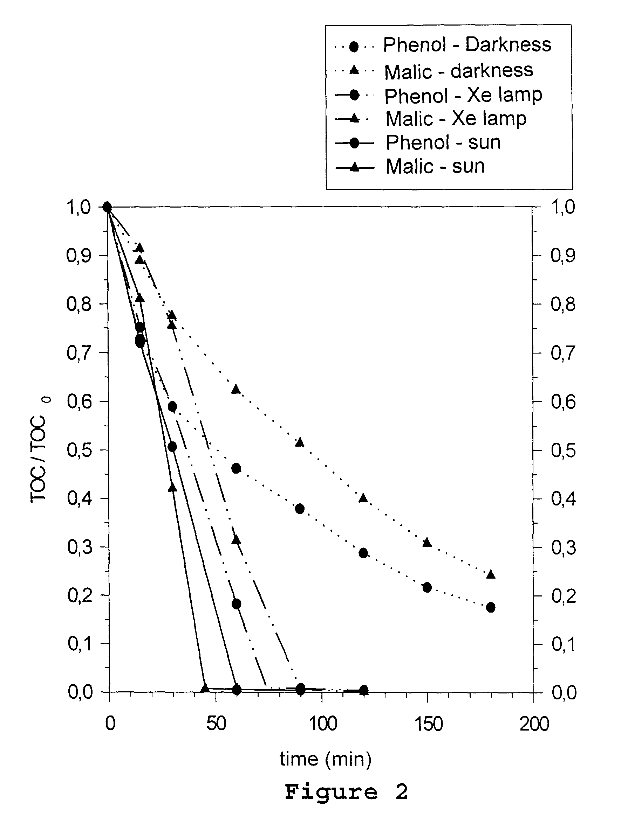

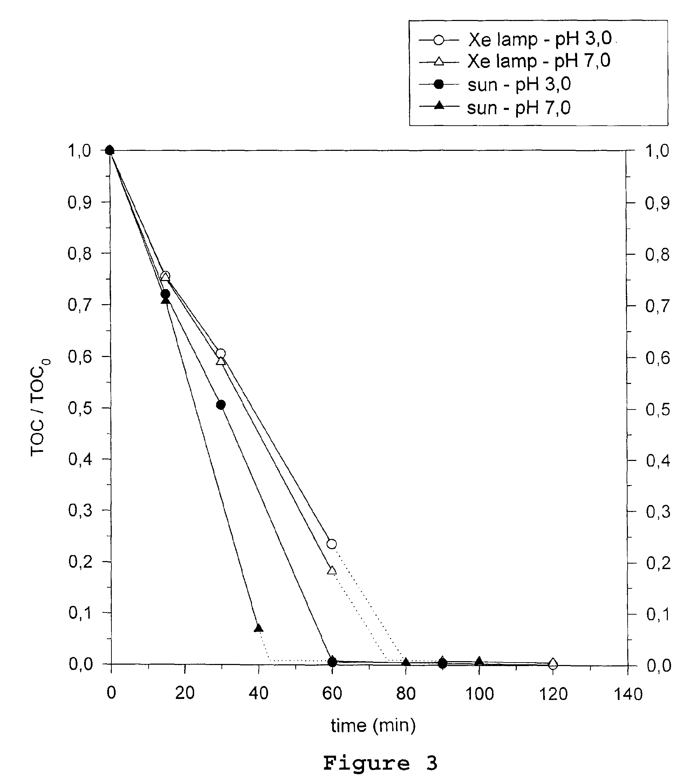

Figure 2 shows a comparison of TOC degradation of different solutions vs. time, in three different conditions: in the darkness, under irradiation with a Xenon lamp and under sunlight irradiation. The Xenon lamps are appropriate light sources as a model of solar radiation, because their emission spectrum is similar to the solar spectrum. During the development of the present invention, degradation processes of organic matter by means of ozonisation and irradiation with a Xenon lamp as a model of solar radiation have been carried out. However, the degradation processes of organic matter in aqueous solution, by means of ozonisation and irradiation with a Xenon lamp, are not encompassed by the scope of the present invention, since they do not suppose a cost reduction over the existent prior art processes and, on the other hand, TOC reduction yields are lower than those obtained with sunlight. Such as it will be proven through Figure 3, by means of the organic matter degradation process by ozonisation and irradiation either with a Xe lamp or with sunlight, according to a process of the present invention, a surprising improvement is obtained over similar processes in the darkness. Said improvement is clearly superior when the irradiation is carried out with sunlight.

In particular, Figure 2 represents the evolution of TOC vs. time for phenol (●) and malic acid (▲) solutions ozonised under different experimental conditions: In the darkness (dotted line ···), under irradiation with a Xe lamp (dotted broken line - ·· -) and under solar irradiation (full line). Initial concentration = 250 ppm; T = 25°C; Ozone flow = 1,7 g·hr⁻¹.

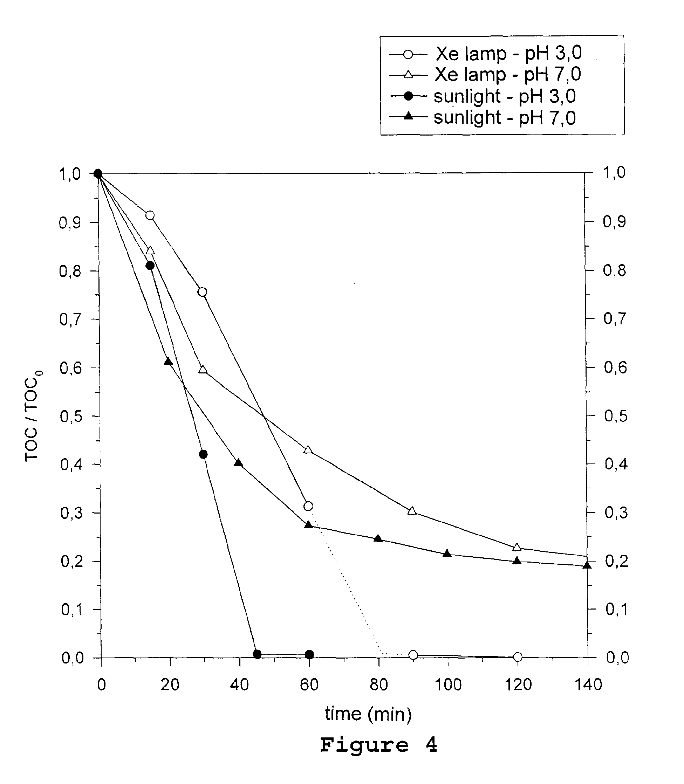

Figures 3 and 4 correspond to a study for determining the influence of pH. In said study, two types of radiation sources have been used: sunlight and Xe lamp. The irradiation experiments with a Xe lamp have been carried out for comparative purposes.

Figure 3 represents TOC decrease as a function of irradiation time for ozonised phenol solutions at different pH values and irradiated with different light sources: (○) pH 3.0 and Xe lamp, (Δ) pH 7.0 and Xe lamp, (•) pH 3.0 and sunlight, (▲) pH 7.0 and sunlight. Initial concentration = 250 ppm; T = 25°C; Ozone flow = 1,7 g·hr⁻¹.

Figure 4 represents the TOC decrease as a function of irradiation time for ozonised malic acid solutions at different pH values and irradiated with different light sources: (○) pH 3.0 and Xe lamp, (Δ) pH 7.0 and Xe lamp, (•) pH 3.0 and sunlight, (▲) pH 7.0 and sunlight. Initial concentration = 250 ppm; T = 25°C; Ozone flow = 1.7 g·hr⁻¹.

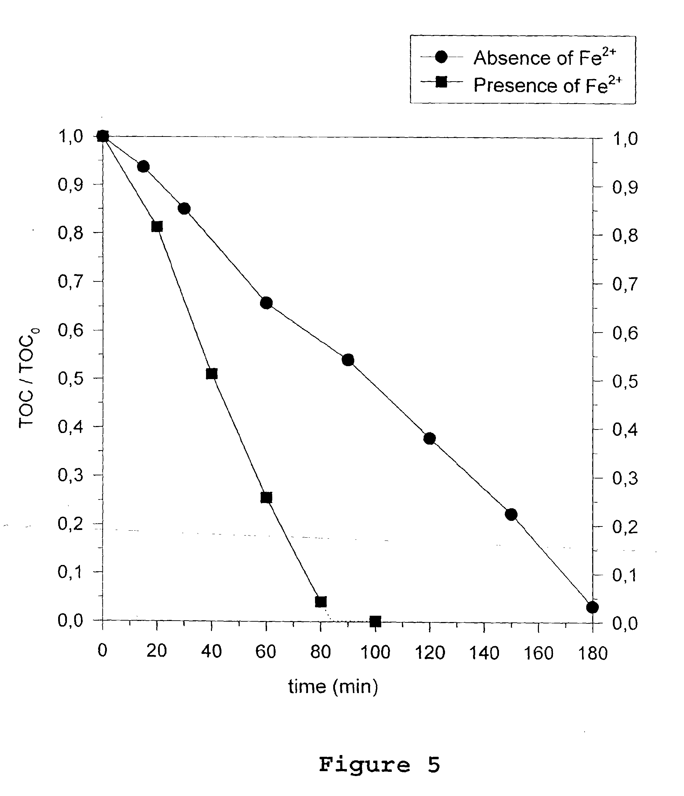

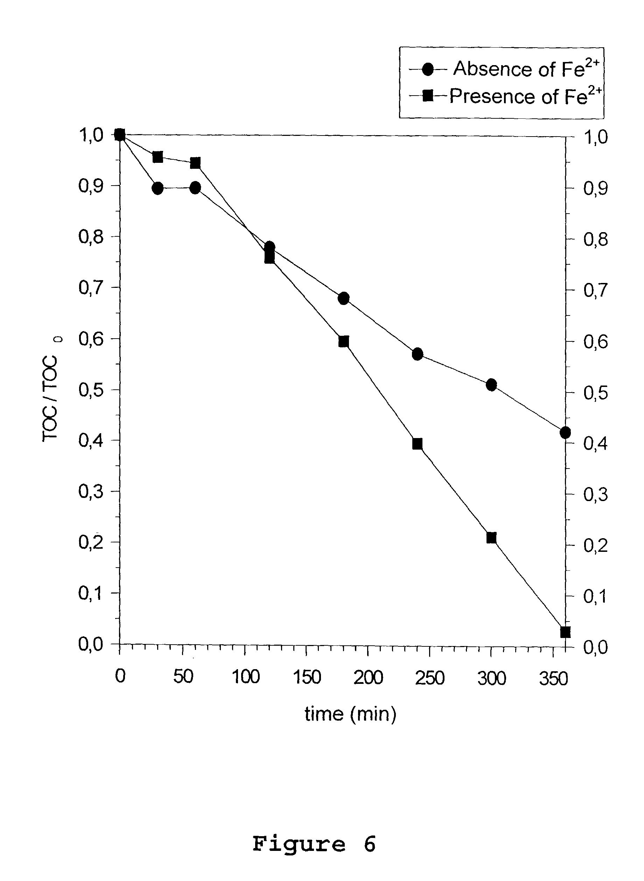

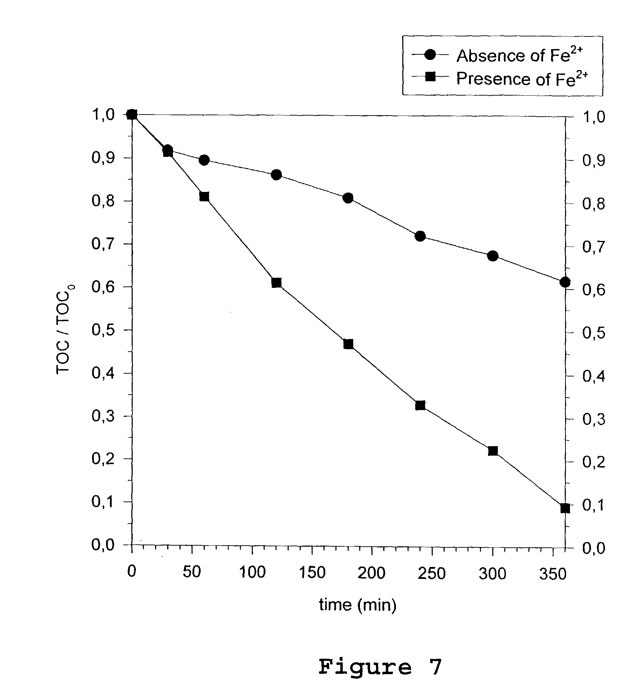

Figures 5 to 7 show that the degradation of organic matter according to a process of the present invention is quicker in the presence of a catalyst. On the other hand, Figures 6 and 7 demonstrate that the process of the present invention is viable for high concentrations of organic matter to be degraded.

Figure 5 represents the TOC evolution as a function of irradiation time for phenol solutions ozonised and sunlight irradiated in the absence of Fe²⁺ (●) and the presence of 10⁻³ M Fe²⁺ (■). Initial concentration = 1500 ppm; T = 25°C; Ozone flow = 1.5 g·hr⁻¹. (The experiment in the absence of Fe²⁺ was performed in September).

Figure 6 represents the TOC evolution as a function of irradiation time for solutions with a high phenol concentration, ozonised and sunlight irradiated in the absence of Fe²⁺ (●) and in the presence of 10⁻³ M Fe²⁺ (■). Initial concentration = 10,000 ppm; T = 25°C; Ozone flow = 1.2 g·hr⁻¹.

Figure 7 represents the TOC evolution as a function of irradiation time for solutions with a high malic acid concentration ozonised and sunlight irradiated in the absence of Fe²⁺ (●) and the presence of 10⁻³ M Fe²⁺ (■). Initial concentration = 10,000 ppm; T = 25°C; Flux of ozone = 1.2 g·hr⁻¹.

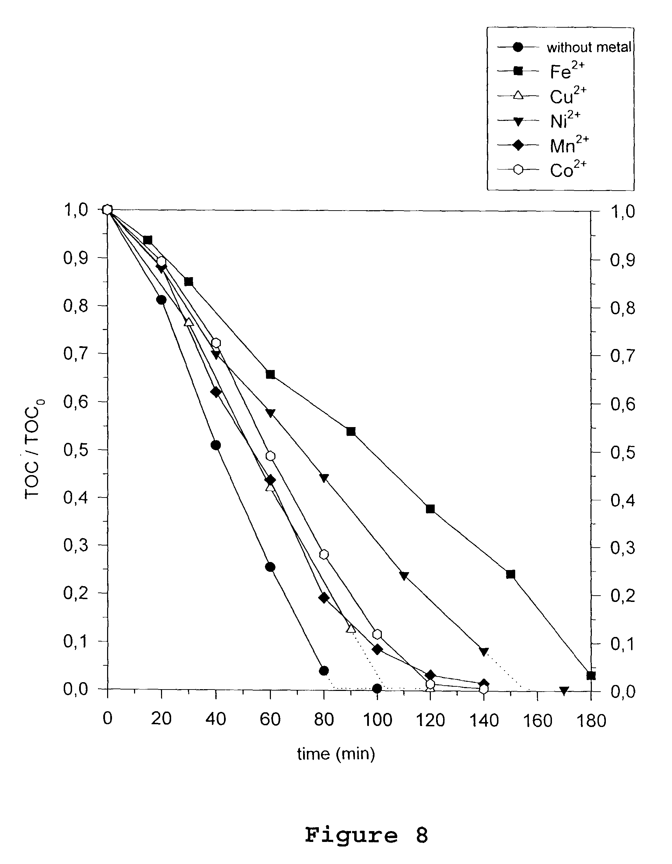

Figure 8 is a comparative representation of the TOC evolution as a function of irradiation time for phenol solutions ozonised and sunlight irradiated in the absence or in the presence of catalysts based on different transition metals. The used catalyst concentrations range from 3 M to 10 M; phenol concentration = 1500 ppm; pH = 3; T = 25°C; Ozone flow = 1.8 g/hr.

Next, several examples are provided by way of illustration of the invention, although they are not to be construed as limitative of the scope thereof.

### EXAMPLES

With comparative purposes, several experiments similar to those performed with sunlight have been carried out by using as a light source a 250-W Xe lamp, since its emission spectrum is similar to the solar spectrum. Therefore, the Xe lamp has merely been used as a sunlight model, and the corresponding experiments have been carried out with comparative purposes. As previously indicated, the ozonisation plus Xe-lamp irradiation processes are not contemplated within the scope of the present invention.

In all of the experiments, a 100-ml volume Pyrex glass reactor has been used, which was thermostated at 25°C.

Ozone was produced in a Sanders Ozonisator; model Work-Ozonisator 301.7; fed with pure oxygen. The resulting gas from the ozonisator is a mixture of oxygen and ozone that was bubbled immediately into the solution through a metallic diffuser. The concentration of ozone in the gaseous mixture was determined by iodometry, before being introduced in the reactor.

As organic test substances, phenol and malic acid have generally been used, and in some instances aniline or dichlorophenoxyacetic acid.

Examples 1 and 2 show that the degradation rate of TOC according to a process of the present invention, where an ozonisation and sunlight irradiation is carried out, is higher than that obtained according to a process where ozonisation is conducted in the darkness.

### EXAMPLE 1. Effect of sunlight on the ozonisation of an aniline solution

In the following experiment, a glass reactor containing 500 ml of an aniline solution at a concentration of about 4·10⁻³ mol·l⁻¹ was used. Subsequently, concentrated H₂SO₄ was added dropwise to the solution until the pH thereof attained a value of 3.05.

The solution so prepared was subjected, by using a diffuser, to bubbling of an oxygen plus ozone stream. The oxygen flow that fed the ozonisator and passed through the solution was of 400 ml·min⁻¹, and the current intensity applied at the ozonisator was of 0.2 A. Under these conditions, the gaseous current contained an ozone amount of about 1.5 g·hr⁻¹. In addition, during ozonisation the solution was kept in the darkness until a certain moment in which the incidence of sunlight thereto was allowed.

The results of the experiment were computed as a function of the concentration change of total organic carbon (TOC) in the solution vs. the reaction time.

As it can be seen from Figure 1, aniline degradation in aqueous solution increases markedly when irradiating the solution with sunlight.

### EXAMPLE 2. Effect of sunlight on ozonisation of phenol and malic acid solutions

To evaluate the effect of sunlight on the ozonisation of different compounds, ozonisation of phenol and malic acid solutions (250 ppm; pH 3) has been carried out under different experimental conditions, with comparative purposes. Therefore, the ozonisation of these solutions was performed in the darkness, under irradiation with a Xe lamp, and under irradiation with sunlight. The results are presented in Figure 2.

A very important improvement is observed when the solutions of both compounds were irradiated either with the Xe lamp or with sunlight, although this effect is more intense with sunlight. In Table 1, the removal rates for TOC, calculated from data obtained during the first hour of reaction, are presented.

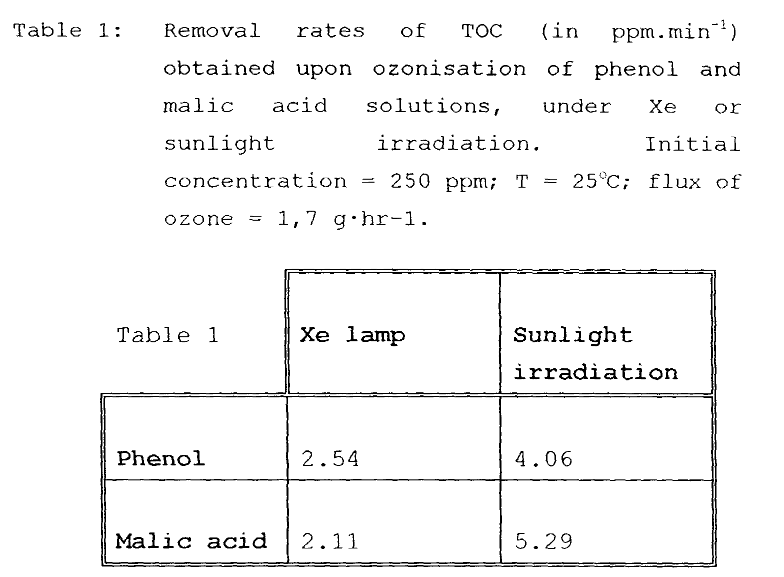

An important difference between the experiments in the darkness and under irradiation is the shape of curves. While the obtained data when ozonising in the darkness can be described approximately by means of a firs order kinetics, this does not happen when ozonising under irradiation. In this case, the removal rate remains approximately constant along the whole process. It is remarkable that the initial rates, even being higher for phenol than for malic acid, do not seem to depend upon the presence of light. Nevertheless, it is clearly observed in Figure 2 that the ozonisation rate decreases ostensibly as the experiment proceeds.

### EXAMPLE 3. Effect of pH

With the purpose of studying the effect of the pH of the medium in a degradation and/or decomposition process of organic matter, according to the invention, sunlight irradiations of phenol and malic acid solutions at 250 ppm have been carried out at different pH values. Accordingly, the results obtained at pH 7.0 have been compared with those obtained at pH 3.0.

On the other hand, similar experiments have been performed where irradiation with a Xe lamp as a model of sunlight was carried out, with the aim of having additional data to test the effect of pH.

The obtained results are shown in Figures 3 (phenol) and 4 (malic acid).

By observing the obtained curves, it may be stated that phenol degradation is quicker at pH 7 than at pH 3, both with the Xe lamp and with sunlight. This difference is of 3% with the Xe lamp, and of 26% with sunlight (both values calculated 40 minutes after beginning the reaction).

On the other hand, malic acid degrades more quickly at pH 3.0. At pH 7.0, the shape of the plot of TOC vs. time is different from that obtained at pH 3.0, which seems to indicate a change in the chemical behaviour of the system. Again, at both pH values, the removal rate of TOC is higher upon irradiating with sunlight or with a Xe lamp than in the darkness. In the same way, under irradiation with sunlight higher rates are obtained than under irradiation with a Xe lamp.

Examples 4 and 5 show that the organic matter degradation process in solution, according to the present invention, is more efficient when a homogeneous phase catalyst is present therein.

### EXAMPLE 4. Effect of a Fe²⁺-based catalyst

We have wanted to check the effect of the addition of a Fe²⁺-based catalyst on a degradation and/or decomposition process of organic matter according to the invention. To this end, the kinetics obtained in the presence and the absence of Fe²⁺ in 1500-ppm phenol solutions has been compared. In Figure 5, the obtained data have been represented.

It can be observed that in the presence of Fe²⁺ (1 mM), the yield of the reaction increases in a very significant way. This fact can be the consequence of both the photochemistry of the Fe complexes and of the organic matter or of a possible catalytic effect of Fe on ozone decomposition, such as it has been described in the specification.

The reaction rate remains approximately constant along the process, so that it has been able to apply a least squares method, starting from which the following removal rates of organic matter have been calculated:

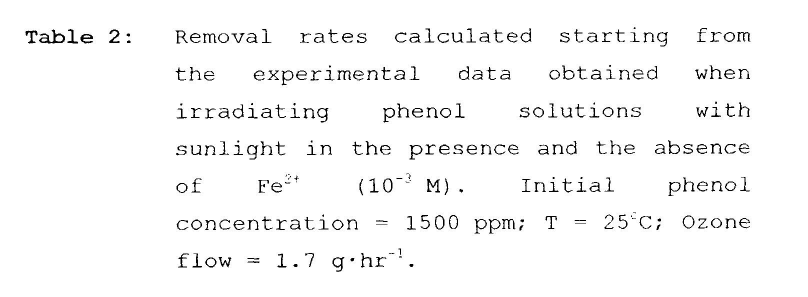

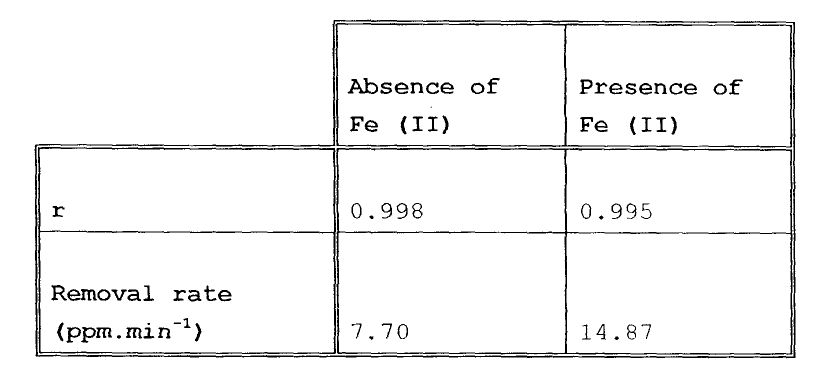

These results demonstrate that the efficiency of the organic matter degradation process according to the invention improves in the presence of a homogeneous phase catalyst.

### EXAMPLE 5. Effect of a Fe²⁺-based catalyst

In the two following experiments, a glass reactor containing 100 ml of a synthetic solution of dichlorophenoxyacetic acid at a concentration of 2·10⁻³ mol·l⁻¹ was used. When preparing this solution, a sufficient quantity of FeSO₄ was added in order to obtain a Fe²⁺ concentration of 20 mg·l⁻¹. In the first of the experiments, concentrated H₂SO₄ was added dropwise to the solution, until the pH attained a value of 3. In the second experiment, the addition was of concentrated NaOH, until a final pH of 5.

The so prepared solutions were subjected to bubbling with an oxygen-ozone stream by using a diffuser. The oxygen flow that fed the ozonisator and passed through the solutions was of 400 ml·min⁻¹, and the current intensity applied at the ozonisator was of 0.2 A. Under these conditions, the gaseous current contained an ozone amount of about 1.5 g·hr⁻¹. In addition, during ozonisation the solutions were irradiated with the light produced by a xenon lamp having a power rating of 250 W, from a distance of 20 cm.

The results of the two experiments were computed in terms of concentration change of total organic carbon (TOC) in the solutions with reaction time. Table 3 sets forth these results as compared with those corresponding to other experiments performed under identical experimental conditions, except that the solutions did not contain the FeSO₄ salt:

| | pH | [Fe²⁺] (mg·l⁻¹) |
|---|---|---|
| Exp. A | 3 | 20 |
| Exp. B | 3 | - |
| Exp. C | 5 | 20 |
| Exp. D | 5 | - |

**Table 3**

| time (min.) | | [TOC] (mg·1⁻¹) | | |
|---|---|---|---|---|
| | Exp. A | Exp. B | Exp. C | Exp. D |
| 0 | 148 | 148 | 148 | 148 |
| 20 | 81 | 120 | 95 | 116 |
| 40 | 34 | 103 | 48 | 89 |
| 60 | 22 | 96 | 39 | 78 |
| 90 | 5 | 76 | 19 | 55 |

The results clearly show the improvement in the dichlorophenoxyacetic acid degradation when ozonisation is carried out in the presence of Fe²⁺.

### EXAMPLE 6. Viability of a process according to the invention at high organic matter concentrations, in the absence or the presence of a catalyst

Figures 6 and 7 show the results obtained when irradiating with sunlight 10000-ppm phenol and malic acid solutions, respectively, in which ozone is bubbled, in the presence and the absence of Fe²⁺ (1 mM).

In both cases, the reaction yield clearly increases in the presence of Fe²⁺. This phenomenon is more noticeable in the case of malic acid. After a 6-hr irradiation, the presence of Fe²⁺ in the solution brings about a 67% and a 239% yield increase, in the case of phenol and malic acid, respectively. For both compounds, mineralisation values higher than 90% are attained under these conditions.

Malic acid has a linear hydrocarbon chain having 4 carbons atoms with a carboxyl group at each end thereof. The presence of these groups can be the basis of the yield increase in the case of phenol, since these groups form photolabile complexes with Fe that, when irradiated with UV-visible light, release the carboxylic groups in the form of CO₂, whereupon Fe (II) and organic radicals are formed, which propagates the reaction chain. This reaction is known as photodecarboxylation.

For both compounds, removal values higher than 90% are attained after a 6-hr reaction in the presence of Fe²⁺.

The results of this example evidence once more that the efficiency of the organic matter degradation process according to the invention improves in the presence of a homogeneous phase catalyst. On the other hand, it has been proven that the degradation and/or decomposition reaction of organic matter according to a process of the present invention also performs efficiently for high concentrations of organic matter to be degraded.

### EXAMPLE 7. Comparative example about the use of different homogeneous phase catalysts

The catalytic effect of different metals of valences 2 and 3 or 1 and 2 was compared in a degradation and/or decomposition process of organic matter according to the invention. The assay was started from phenol solutions at a concentration of 1500 ppm, to which a metal at a concentration of 10⁻³ M was added. The initial pH was adjusted to a value of 3.0 and an ozone flow of 1.8 g/hr was supplied. In all the cases, the obtained final pH after reaction was between 2 and 3,5.

In Figure 9, the degradation curves of TOC are represented as a function of time for each case. These results demonstrate that different catalysts based on transition metals of valences 2 and 3 or 1 and 2, according to the process of the present invention, can be used, whereby higher yields than in the absence of catalyst are obtained.

## Claims

1. A process for the degradation and/or decomposition of organic compounds in aqueous solution that comprises ozonisation and irradiation of said solution, characterized in that said irradiation is carried out with direct or indirect sunlight.

2. A process according to Claim 1, wherein ozonisation and irradiation are carried out simultaneously.

3. A process according to Claim 1, wherein irradiation is carried out after ozonisation.

4. A process according to Claim 1, wherein said ozonisation is carried out in the presence of a catalyst in homogeneous phase.

5. A process according to Claim 4, wherein said catalyst is a compound or a mixture of compounds containing one or several transition metals.

6. A process according to Claim 5, wherein said transition metals are those having valences 2 and 3 or 1 and 2, preferably Fe, Cu, Ni, Mn or Co ions.

7. A process according to anyone of Claims 5 or 6, wherein the concentration of said transition metals ranges from 0.01 mM to 50 mM, preferably from 0.1 mM to 5 mM.

8. A process according to anyone of Claims 1 to 4, wherein the concentration of said organic compounds is lower than, or equal to, 100,000 ppm, preferably lower than, or equal to, 20,000 ppm.

9. A process according to anyone of the previous Claims for the purification of contaminated waters.
